# EUROPÄISCHE PATENTANMELDUNG

(11) **EP 2 174 733 A2**
(43) Veröffentlichungstag der Anmeldung: **14.04.2010**
(21) Anmeldenummer: 09012575.8
(22) Anmeldetag: 05.10.2009
(51) Int. Cl.: B21D 53/22, B21K 1/76, B21J 5/12

(54) **Blechbauteil und Verfahren zu seiner Herstellung**

(30) Priorität: 09.10.2008 DE 102008050593
(71) Anmelder: Benteler Automobiltechnik GmbH, 33102 Paderborn (DE)
(72) Erfinder: Hinzpeter, Horst, 33104 Paderborn (DE); Orzelek, Patrick, 33129 Delbrueck (DE); Roxel, Andreas, 59329 Wadersloh (DE)
(74) Vertreter: Griepenstroh, Jörg

(57) **Zusammenfassung**

Verfahren zur Herstellung eines Blechbauteils (1) mit einem Bereich (3) erhöhter Rutschsicherheit, bei welchem in dem eine Öffnung (2) umgebenden Bereich (3) Profilierungen (4) durch Materialverdrängung hergestellt werden. Das Blechbauteil (1) weist auf der den Profilierungen (4) gegenüberliegenden unteren Seite (7) des Blechbauteils (1) unmittelbar gegenüberliegend der Profilierungen (4) einen in Richtung der Profilierungen (4) gestauchten Bereich (8) auf. Das Aufstauchen dieses Bereichs (8) erfolgt gleichzeitig mit der Herstellung der Profilierungen (4).

## Beschreibung

Die Erfindung betrifft ein Verfahren zur Herstellung eines Blechbauteils und mit einem Bereich erhöhter Rutschsicherheit gemäß den Merkmalen im Oberbegriff des Patentanspruchs 1 sowie ein solche Blechbauteil mit den Merkmalen des Patentanspruchs 5.

Die am häufigsten verwendeten Elemente zum lösbaren Verbinden von Bauteilen sind Schrauben. Zur leichteren Montage und Demontage können Schrauben mit unverlierbaren Sicherungselementen kombiniert werden.

Durch die DE 44 25 837 C2 zählt es zum Stand der Technik, Sicherungsscheiben auf ihrer Ober- und Unterseite mit Zähnen zu versehen. Hierzu werden in einem Stahlblech-Streifen Näpfe geprägt, innerhalb derer die Zähne ausgebildet werden. Anschließend wird zentrisch ein kreisrundes Loch gestanzt und anschließend wird der mit Zähnen versehene Lochrand zur Herstellung der Sicherungsscheibe ausgestanzt. Solche Sicherungsscheiben sind Bauteile, die sowohl dem Blechbauteil als auch der Schraube, mittels welcher die Blechbauteile verbunden werden sollen, lösbar zugeordnet sind. Während der Montage müssen die Sicherungsringe also auf die Schraube aufgesetzt und bis zum Anziehen der Schraube gehalten werden.

Es ist aber auch möglich, den Bereich der Bauteilfläche, mit welcher die Schraube in Kontakt kommt, mit einer Profilierung zu versehen, um die Rutschsicherheit im Bereich der Schraubenöffnung zu erhöhen.

Derartige Profilierungen, beispielsweise in Form von Verzahnungen können durch Materialverdrängung, d.h. durch Prägen hergestellt werden. Bei einem ebenen Blechbauteil konstanter Dicke führt eine Materialverdrängung zwangsläufig zu Vertiefungen. Das zur Materialverdrängung verwendete Prägewerkzeug muss dabei mit erheblicher Kraft in das Blechbauteil gepresst werden, wobei die Tiefe der Profilierungen oftmals relativ gering ist. Die zum Prägen aufzubringenden Kräfte hängen von der Art, Tiefe und Größe der Profilierungen sowie den Materialeigenschaften des Werkstücks ab. Mit zunehmender Formfüllung des Prägewerkzeugs steigt auch die aufzubringende Kraft zum Verprägen an. Unter bestimmten Umständen ist die Formfüllung nicht befriedigend, so dass nur eine geringe Ausprägung bzw. Profilierung und daher eine geringere Wirksamkeit der Prägung bezüglich der Rutschhemmung erreicht wird.

Der Erfindung liegt die Aufgabe zu Grunde, aufzuzeigen, wie mittels besserer Formfüllung des Prägewerkzeugs und gleichzeitiger verfahrenstechnischer Verbesserungen in einem Teilbereich eines größeren Blechbauteils griffige Profilierungen zu Erhöhung der Rutschsicherheit mittels Materialverdrängung hergestellt werden können. Ferner soll ein Blechbauteil mit einer solchen Profilierung aufgezeigt werden.

Die erste Aufgabe wird durch ein Verfahren mit den Maßnahmen des Patentanspruchs 1 gelöst.

Ein auf diese Weise hergestelltes Blechbauteil ist Gegenstand des Patentanspruchs 5.

Vorteilhafte Weiterbildungen des Erfindungsgedankens sind Gegenstand der abhängigen Patentansprüche.

Bei dem erfindungsgemäßen Verfahren ist vorgesehen, dass das Blechbauteil auf der den Profilierungen gegenüberliegenden Seite des Blechbauteils unmittelbar gegenüberliegend der Profilierungen gestaucht wird. Das Stauchen erfolgt gleichzeitig mit der Herstellung der Profilierungen.

Der Vorteil bei dieser Vorgehensweise ist, dass durch das Aufstauchen des Blechbauteils mehr Material für die Profilierungen zur Verfügung steht, so dass die im Kaltpressverfahren hergestellten Spitzen der Profilierungen tiefer in das Prägewerkzeug zur Herstellung der Unebenheiten eindringen. Diese kalt verfestigten Spitzen verkrallen sich in der Einbaulage besser mit einer Anbindungsfläche, insbesondere mit einem Schraubenkopf, so dass es zu einer Erhöhung der Losbrechkraft, d.h. zu einer erhöhten Rutschsicherheit kommt. Mit dem erfindungsgemäßen Verfahren kann die Formfüllung des Prägewerkzeugs signifikant verbessert werden, und zwar unabhängig davon, ob weitere Bereiche des Blechbauteils ebenfalls gleichzeitig umgeformt werden.

Das Blechbauteil wird nicht insgesamt nach dem erfindungsgemäßen Verfahren profiliert, sondern nur in wenigstens einem Teilbereich, über welchen das Blechbauteil mit weiteren Bauteilen verbunden, insbesondere verschraubt, werden soll. Das Blechbauteil selbst besitzt daher im Sinne der Erfindung unprofilierte und ungeprägte Bereiche. Dennoch kann das Blechbauteil selbst eine größere Platine oder auch ein umgeformtes oder 3-dimensional umzuformendes Bauteil insbesondere für Kraftfahrzeuge sein.

Bei der vorgesehenen Öffnung im Blechbauteil handelt es sich vorzugsweise um eine Bohrung oder eine kreisrunde Lochung. Die Profilierungen sind vorzugsweise als Verzahnung ausgebildet, wobei sich die einzelnen Zähne der Profilierungen in Radialrichtung in Bezug auf die Öffnung erstrecken. Dadurch kann eine maximale Verkrallung gegen die in Umfangsrichtung der Öffnung wirkenden Kräfte, wie sie beim Verschrauben wirken, erreicht werden.

Wesentlich bei der Erfindung ist, dass für das Aufstauchen des Materials kein separater Arbeitsschritt erforderlich ist. Das Aufstauchen erfolgt gleichzeitig mit dem Prägevorgang, d.h. der Materialverdrängung zur Ausbildung der Profilierung. Der gestauchte Bereich auf der den Profilierungen abgewandten Seite des Blechbauteils wird nicht profiliert, sondern bleibt vorzugsweise glatt.

Sowohl der gestauchte als auch der mit Profilierungen versehene Bereich ist vorzugsweise kreisringförmig konfiguriert, wobei beide Bereiche die gleichen Innen- und Außendurchmesser aufweisen und daher im Wesentlichen gleich groß sind. Der gestauchte bzw. profilierte Bereich ist von einem flächenmäßig größeren ungestauchten bzw. unprofilierten Bereich umgeben.

Die Tiefe des gestauchten Bereichs liegt vorzugsweise zwischen 10% und 50% der Dicke des ungestauchten Blechbauteils.

Das auf diese Weise bearbeitete Blechbauteil zeichnet sich somit dadurch aus, dass auf einander gegenüberliegenden Seiten des Blechbauteils einerseits ein mit Profilierungen versehener Bereich randseitig einer Öffnung vorgesehen ist und auf der gegenüberliegenden Seite ein gleichgroßer, in Richtung der Profilierungen gestauchter, ebener Bereich ausgebildet ist.

Einzelheiten des erfindungsgemäßen Verfahrens sowie des auf diese Weise hergestellten Blechbauteils werden nachfolgend anhand der in schematischen Zeichnungen dargestellten Ausführungsbeispiele näher erläutert. Es zeigt:
- Figur 1: in perspektivischer Ansicht ein Ausschnitt aus einem Blechbauteil mit einer Verprägung zur Erhöhung der Rutschsicherheit;
- Figur 2: die Rückseite des in Figur 1 dargestellten Blechbauteils,
- Figur 3: eine Matrize zur Herstellung eines solchen Blechbauteils und
- Figur 4: die Matrize der Figur 1 mit aufgesetztem Stempel zur Herstellung des Blechbauteils.

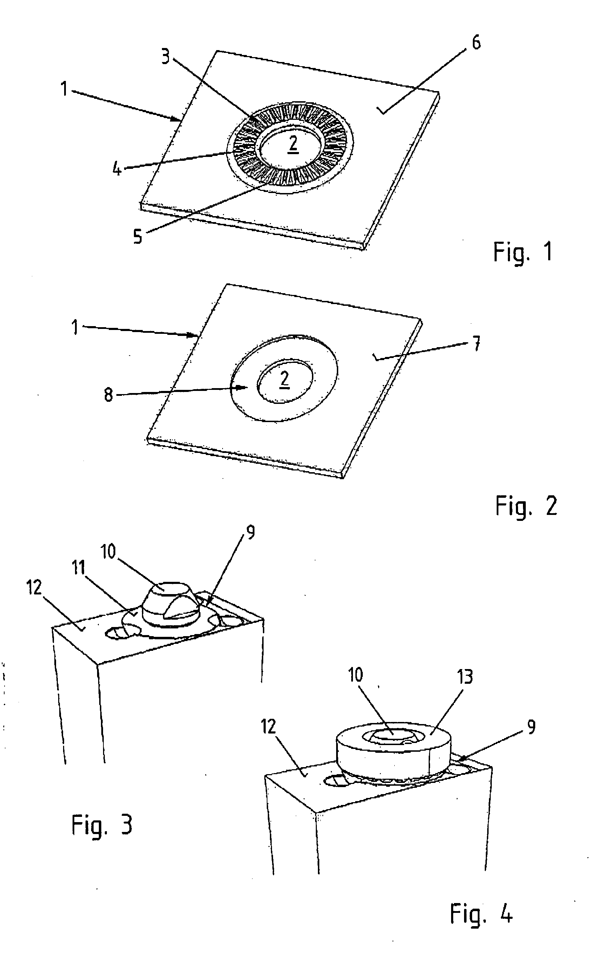

Figur 1 zeigt ein Blechbauteil 1 in stark vergrößerter Darstellung. In diesem quadratischen Blechbauteil 1 befindet sich eine kreisrunde Öffnung 2, die von einem ringförmigen Bereich 3 umgeben ist. Dieser Bereich 3 ist mit einer Profilierung 4 in Form einer Verzahnung versehen. Die einzelnen Zähne 5 weisen strahlenförmig zum Mittelpunkt der Öffnung 2 bzw. erstrecken sich in Radialrichtung in Bezug auf die Öffnung 2. Die Spitzen der Zähne 5 sind gegenüber den übrigen Bereichen des Blechbauteils 1 erhaben und dienen zur Verkrallung mit einem benachbarten Bauteil, wie zum Beispiel einer Schraube oder einem weiteren Blechbauteil. Die Profilierung 4 befindet sich nur auf einer oberen Seite 6 des Blechbauteils 1. Das Blechbauteil selbst ist um ein Mehrfaches größer als der mit der Profilierung 4 versehene Bereich 3.

Die untere Seite 7 des Blechbauteils 1 ist in Figur 2 dargestellt. Es ist eine ringförmige Vertiefung zu erkennen, die als gestauchter Bereich 8 bezeichnet wird. Der Außendurchmesser des gestauchten Bereichs 8 ist genauso groß wie der Außendurchmesser des mit der Profilierung 4 versehenen Bereichs 3. Die Tiefe des gestauchten Bereichs 8 liegt zwischen 10% und 50% der Dicke des ungestauchten Blechbauteils 1. bzw. der ungestauchten Bereiche des Blechbauteils.

Die Herstellung der Profilierung 4 erfolgt beispielsweise mittels eines in den Figuren 3 und 4 dargestellten Presswerkzeugs.

Figur 3 zeigt einen Ausschnitt einer Matrize 9 zur Herstellung eines solchen Blechbauteils 1. Die Matrize 9 weist einen Zentriernocken 10 auf, welcher in die Öffnung 2 des Blechbauteils 1 fasst. Das noch unverformte Blechbauteil 1 liegt dabei auf einem Auflagerbereich 11 auf, welcher den Zentriernocken kreisringförmig umgibt und unmittelbar an diesen angrenzt. Dieser Auflagerbereich dient zur Herstellung des in Figur 2 dargestellten gestauchten Bereichs 8. Der außerhalb des dem Zentriernocken 10 benachbarten Auflagerbereichs 11 angeordnete, weitere Auflagerbereich 12 dient zur Abstützung der nicht gestauchten Bereiche des Blechbauteils 1. Während der Herstellung der Profilierungen 4 wird der in Figur 4 dargestellte ringförmige Stempel 13 gegen die obere Seite 6 des Blechbauteils 1 gepresst, wobei die außerhalb des Stempels 13 liegenden Bereiche durch einen nicht näher dargestellten Niederhalter gegen den Auflagerbereich 12 gedrängt werden. Durch den Höhenversatz zwischen den Auflagebereichen 11, 12 entsteht während der Herstellung der Profilierungen 4 an der unteren Seite 7 des Blechbauteils 1 der gestauchte Bereich 8. Somit ist zum Aufstauchen des Materials kein zusätzlicher Arbeitsschritt erforderlich, da das Aufstauchen gleichzeitig mit dem Prägevorgang, d.h. mit dem Herstellen der Profilierungen 4 erfolgt. Die Stauchung bei gleichzeitiger Prägung führt zu einer verbesserten Formfüllung der Prägestruktur des Stempels 13.

### Bezugszeichen:

- 1 -: Blechbauteil
- 2 -: Öffnung
- 3 -: verprägter Bereich
- 4 -: Profilierung
- 5 -: Zahn
- 6 -: obere Seite
- 7 -: untere Seite
- 8 -: gestauchter Bereich
- 9 -: Matrize
- 10 -: Zentriernocken
- 11 -: Auflagerbereich
- 12 -: Auflagerbereich
- 13 -: Stempel

## Patentansprüche

1. Verfahren zur Herstellung eines Blechbauteils mit einem Bereich (3) erhöhter Rutschsicherheit, bei welchem in dem eine Öffnung (2) umgebenden Bereich (3) eine Profilierung (4) durch Materialverdrängung hergestellt wird, wobei dieser profilierte Bereich (3) kleiner als das Blechbauteil (1) ist, **dadurch gekennzeichnet, dass** das Blechbauteil (1) auf der der Profilierung (4) gegenüberliegenden unteren Seite (7) des Blechbauteils (1) unmittelbar gegenüberliegend der Profilierung (4) gestaucht wird, wobei das Verstauchen gleichzeitig mit der Herstellung der Profilierung (4) erfolgt.

2. Verfahren nach Anspruch 1, **dadurch gekennzeichnet, dass** die Profilierung (4) als Verzahnung ausgebildet wird, wobei sich die einzelnen Zähne (5) in Radialrichtung in Bezug auf die Öffnung (2) erstrecken.

3. Verfahren nach Anspruch 1 oder 2, **dadurch gekennzeichnet, dass** der gestauchte Bereich (8) auf der unteren Seite (7) und der mit der Profilierung (4) versehene Bereich (3) auf der oberen Seite (6) des Blechbauteils (1) im Wesentlichen gleich groß gewählt werden.

4. Verfahren nach einem der Ansprüche 1 bis 3, **dadurch gekennzeichnet, dass** der gestauchte Bereich (8) bis zu einer Tiefe gestaucht wird, die zwischen 10% und 50% der Dicke des ungestauchten Blechbauteils (1) beträgt.

5. Blechbauteil mit einem Bereich (3) erhöhter Rutschfestigkeit im Randbereich einer Öffnung (2), wobei in dem Bereich (3) eine Profilierung (4) durch Materialverdrängung ausgebildet sind, wobei auf der der Profilierung (4) gegenüberliegenden, unteren Seite (7) des Blechbauteils (1) eine im wesentlichen gleichgroße, in Richtung der Profilierung (4) gestauchter, ebener Bereich (8) ausgebildet ist.

6. Blechbauteil nach Anspruch 5, **dadurch gekennzeichnet, dass** die Profilierung (4) als Verzahnung ausgebildet sind, wobei sich die einzelnen Zähne (5) in Radialrichtung in Bezug auf die Öffnung (2) erstrecken.

7. Blechbauteil nach Anspruch 5 oder 6, **dadurch gekennzeichnet, dass** die Tiefe des gestauchten Bereichs (8) zwischen 10% und 50% der Dicke des ungestauchten Blechbauteils (1) liegt.
